# EUROPÄISCHE PATENTSCHRIFT

(11) **EP 4 332 702 B1**
(45) Veröffentlichungstag und Bekanntmachung des Hinweises auf die Patenterteilung: **21.10.2026**
(21) Anmeldenummer: 22192914.4
(22) Anmeldetag: 30.08.2022
(51) Int. Cl.: G05B 19/4097, G05B 19/418, G05B 19/4069

(54) **VERFAHREN ZUM BESTIMMEN EINER MONTAGEREIHENFOLGE EINES BAUTEILS MITTELS EINER ELEKTRONISCHEN RECHENEINRICHTUNG, COMPUTERPROGRAMMPRODUKT, COMPUTERLESBARES SPEICHERMEDIUM SOWIE ELEKTRONISCHE RECHENEINRICHTUNG**
METHOD FOR DETERMINING AN ASSEMBLY SEQUENCE OF A COMPONENT BY MEANS OF AN ELECTRONIC COMPUTING DEVICE, COMPUTER PROGRAM PRODUCT, COMPUTER-READABLE STORAGE MEDIUM AND ELECTRONIC COMPUTING DEVICE
PROCÉDÉ DE DÉTERMINATION D'UN ORDRE DE MONTAGE D'UN COMPOSANT AU MOYEN D'UN DISPOSITIF DE CALCUL ÉLECTRONIQUE, PRODUIT DE PROGRAMME INFORMATIQUE, SUPPORT DE STOCKAGE LISIBLE PAR ORDINATEUR ET DISPOSITIF DE CALCUL ÉLECTRONIQUE

(43) Veröffentlichungstag der Anmeldung: 06.03.2024
(73) Patentinhaber: Siemens Aktiengesellschaft, 80333 München (DE)
(72) Erfinder: Boschert, Stefan, 85579 Neubiberg (DE); Fischer, Jan, 81541 München (DE); Liebig, Veronika, 80339 München (DE); Mayer, Hermann Georg, 83209 Prien am Chiemsee (DE); Paffrath, Meinhard, 85622 Feldkirchen (DE); Wehrstedt, Jan Christoph, 81829 München (DE)
(74) Vertreter: Siemens Patent Attorneys

(56) Entgegenhaltungen:
- US-A1- 2020 319 630
- ROHRDANZ F ET AL: "Constraint evaluation for assembly sequence planning", ASSEMBLY AND TASK PLANNING, 1997. ISATP 97., 1997 IEEE INTERNATIONAL S YMPOSIUM ON MARINA DEL REY, CA, USA 7-9 AUG. 1997, NEW YORK, NY, USA,IEEE, US, 7 August 1997 (1997-08-07), pages 263 - 268, XP010241791, ISBN: 978-0-7803-3820-3, DOI: 10.1109/ISATP.1997.615418
- RAKSHIT SOURAV ET AL: "The Influence of Motion Paths and Assembly Sequences on the Stability of Assemblies", IEEE TRANSACTIONS ON AUTOMATION SCIENCE AND ENGINEERING, IEEE SERVICE CENTER, NEW YORK, NY, US, vol. 12, no. 2, 1 April 2015 (2015-04-01), pages 615 - 627, XP011577514, ISSN: 1545-5955, [retrieved on 20150403], DOI: 10.1109/TASE.2014.2345569
- MICHNIEWICZ JOACHIM ET AL: "CAD-Based Automated Assembly Planning for Variable Products in Modular Production Systems", PROCEDIA CIRP, vol. 44, 1 January 2016 (2016-01-01), NL, pages 44 - 49, XP093019421, ISSN: 2212-8271, DOI: 10.1016/j.procir.2016.02.016

## Beschreibung

Die Erfindung betrifft ein Verfahren zum Bestimmen einer Montagereihenfolge eines Bauteils mittels einer elektronischen Recheneinrichtung gemäß dem geltenden Patentanspruch 1. Ferner betrifft die Erfindung ein Computerprogrammprodukt, ein computerlesbares Speichermedium sowie eine elektronische Recheneinrichtung.

Aus dem Stand der Technik sind bereits Produktzeichnungen bekannt, welche in der Regel von Menschen interpretiert und entsprechend durch Maschinen umgesetzt werden. Beispielsweise kann hierbei die Programmierung von Robotern oder CNC-Zerspanungsanlagen als entsprechende Maschinen angesehen werden. Dies ist insbesondere für die Massenfertigung ein ausreichend effizientes Verfahren. Jedoch auf einer einmal programmierten Maschinen können dann, gegebenenfalls auch nach Produktwechsel oder Produktionsunterbrechungen, tausend Instanzen desselben Produkts hergestellt werden. Anders verhält es sich mit der in Zukunft an Bedeutung gewinnenden, individualisierten Produktion, bis hin zur Losgröße 1. Das heißt, verschiedene Varianten von Produkten unterscheiden sich so deutlich voneinander, dass jeweils eigenständige CAD-Zeichnungen dafür vorliegen, die entsprechend einzeln von den Bedienern auf den Maschinen umgesetzt werden müssen. Dies verursacht dann entsprechend hohe Produktionskosten, da keine Skalierungseffekte der Massenproduktion genutzt werden können, was die Produktion gegebenenfalls zeitlich und räumlich einschränkt.

Insbesondere können in den entsprechenden CAD-Bauteilmodellen Einzelbauteile gefertigt werden. Insbesondere bei dem Zusammenbau von mehreren Einzelbauteilen zu einem größeren Bauteil ist jedoch auch die Montagereihenfolge von entscheidender Bedeutung, welche insbesondere automatisiert durchgeführt werden sollte.

ROHRDANZ FETAL: "Constraint evaluation for assembly sequence planning", ASSEMBLY AND TASK PLANNING, 1997. ISATP 97., 1997 IEEE INTERNATIONAL SYMPOSIUM ON MARINA DEL REY, 7. August 1997 (1997-08-07), beschreibt das Problem der Ermittlung und Berechnung neuer Maßstäbe für die Bewertung von Montagekosten, wobei die Bewertungskriterien auf den Ergebnissen des Prozesses zur Überprüfung von Einschränkungen eines hochrangigen Montageplanungssystems basieren und die Auswahl des besten Montageplans auf die Optimierung dieser Bewertungskriterien ausgerichtet werden kann.

RAKSHIT SOURAV ET AL: "The lnfluence of Motion Paths and Assembly Sequences on the Stability of Assemblies", IEEE TRANSACTIONS ON AUTOMATION SCIENCE AND ENGINEERING, 1. April 2015 (2015-04-01), offenbart einen Ansatz für die Stabilitätsanalyse der Demontage mechanischer Teile unter Berücksichtigung der Bewegung von Teilen bei Vorhandensein physikalischer Kräfte wie Schwerkraft und Reibung.

Michniewicz Joachim ET AL: "CAD-Based Automated Assembly Planning for Variable Products in Modular Production Systems", Procedia CIRP, Bd. 44, 1. Januar 2016 (2016-01-01), stellt einen Ansatz vor, der es ermöglicht, die Flexibilität modularer und rekonfigurierbarer Produktionssysteme für die automatisierte Montage variantenreicher Produkte zu nutzen, wobei die erforderlichen Montageprozesse sowie gültige Montageaufträge automatisch aus der CAD-Datei des einzelnen Produkts extrahiert werden.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchen eine Montagereihenfolge eines Bauteils zuverlässig bestimmt werden kann. Die Erfindung ist in dem beigefügten Anspruchssatz beschrieben.

Diese Aufgabe wird durch ein Verfahren, ein Computerprogrammprodukt, ein computerlesbares Speichermedium sowie mit einer elektronischen Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bestimmen einer Montagereihenfolge eines Bauteils mittels einer elektronischen Recheneinrichtung, wobei das Bauteil aus einer Vielzahl von Einzelbauteilen zusammengesetzt wird. Es erfolgt das Bereitstellen eines digitalen Modells des zusammengesetzten Bauteils und das Bestimmen eines Einzelbauteils der Vielzahl von Bauteilen in Abhängigkeit von einem vorgegebenen Kriterium. Es wird zumindest ein Schwerkraftvektor auf das bestimmte Einzelbauteil angewendet. Es erfolgt das Bestimmen einer Auswirkung einer mittels des Schwerkraftvektors erzeugten Kraft auf das Einzelbauteil mittels einer simulativen Physik-Maschine, insbesondere mittels einer sogenannten Physics Engine. Es erfolgt das Bestimmen der Montagereihenfolge in Abhängigkeit von der bestimmten Auswirkung unter Berücksichtigung einer Kollisionserkennung des bestimmten Einzelbauteils mit einem weiteren Einzelbauteil.

Insbesondere kann somit für eine vollständig automatisierte Produktionsanlage die Montage von Produkten von einem CAD-Plan entsprechend abgeleitet werden. Hier wird insbesondere die richtige Reihenfolge und Fügerichtung von Bauteilen betrachtet. Dies kann auch für weitere Verarbeitungsschritte, beispielsweise für entsprechende Fügetechniken, wie Kleben, Nieten oder Schweißen berücksichtigt werden. Üblicherweise liegen dabei die CAD-Zeichnungen für den fertig gefügten Zustand, insbesondere des Bauteils, vor und insbesondere eine Darstellung des Endprodukts. Dies wird nun als Ausgangspunkt für die weitere Betrachtung genommen. Die Darstellung von entsprechenden Zwischenschritten, insbesondere in einer Art Bauanleitung, wird dadurch standardisiert und somit eine automatisierte Verarbeitung möglich.

Insbesondere können somit Einzelbauteile, die zur Montage gesteckt oder ineinander gehalten beziehungsweise auseinander gelegt werden, sich üblicherweise voneinander lösen, sofern noch keine feste Verbindung hergestellt wurde. Die feste Verbindung könnte beispielsweise durch Verschrauben, Kleben oder Schweißen hergestellt worden sein. In dieser Form sind solche Bauteile auch im CAD dargestellt, sodass sich ein entsprechendes Lösen der Teile auch simulieren lässt. Verschraubungen fehlen üblicherweise oder sind ohne Gewinde dargestellt, sodass auch diese Elemente im Modell voneinander gelöst werden können. Verschraubungen mit Gewinde können selektiv entfernt werden oder können gegebenenfalls sogar durch weitere Simulationsverfahren behandelt werden. Eine Ausnahme stellen geklippte Verbindungen dar, die zuvor selektiv durch ein spezielles Verfahren aus dem entsprechenden digitalen Modell entfernt sind.

Ein so vorbearbeitetes Modell kann nun mit Hilfe einer Physics Engine zerlegt werden. Neben anderen Effekten, wie beispielsweise Reibung und Trägheit, können moderne Physics Engines insbesondere die Auswirkung und das Anlegen der Kräfte, insbesondere der Schwerkraft, simulieren.

Insbesondere basiert somit das Verfahren auf einer dreidimensionalen Zeichnung, wobei das Bauteil insbesondere aus verschiedenen Einzelbauteilen ausgebildet ist, die später zusammengesetzt werden. Um die entsprechende Montagereihenfolge bestimmen zu können, werden zunächst alle Einzelbauteile im Raum fixiert. Es kann zufällig ein Teil ausgewählt werden, dessen Fixierung aufgehoben wird. Als nächster Schritt folgt nun die Anwendung des Kraftvektors, insbesondere des Schwerkraftvektors, an das ausgewählte Teil. Die Auswirkung der Kraft wird mittels der Physik-Simulation, insbesondere mittels der Physics Engine, bestimmt. Der Vorteil liegt darin, dass auch der gesuchte Lösungs-Vektor, insbesondere der Montagerichtung, nicht identisch mit dem angelegten Kraftvektor sein muss, sondern sich lediglich im richtigen Halbraum, das bedeutet, insbesondere der richtigen Seite der Ebene senkrecht zum Kraftvektor, befinden muss. Dadurch können durch ein Simulationsdurchlauf quasi unendlich viele mögliche Montagerichtungen durchprobiert werden, wobei sich alle Vektoren im aktuell getesteten Halbraum mit einem Winkel von < 90° zum Kraftvektor befinden. Je nach Stärke von Schwerkraft und Reibung kann beispielsweise dann wiederum das Einzelbauteil entsprechend kippen, insbesondere in Richtung der Schwerkraft. Je nach Qualität der Simulation können damit auch nicht lineare Fügerichtungen behandelt werden bis hin zum Lösen von Schraubverbindungen.

Eine entsprechend hohe Auflösung ist dabei entsprechend wichtig, da beispielsweise sonst eine Kollisionserkennung der Physics Engine nicht korrekt funktionieren würde. Dies spielt insbesondere dann eine Rolle, wenn das Einzelbauteil entlang eines anderen Vektors gelöst wird als dem eigentlichen Kraftvektor.

Lässt sich ein Einzelbauteil auf diese Weise lösen, so wird zunächst noch festgestellt, ob eine montierbare Reihenfolge beschrieben wird. Das heißt, insbesondere dürfen beispielsweise keine "schwebenden" Teile entstehen, die durch das Herausziehen eines Teils außerhalb der Reihenfolge entstehen. Dies kann leicht durch die entsprechende Kollisionserkennung festgestellt werden, indem untersucht wird, ob die verbleibenden Teile einen geschlossenen Verbund darstellen. Ist dies nicht der Fall, so wird das Verfahren beispielsweise abgebrochen. Wird nun geeignetes Bauteil gefunden, so wird dieses einer entsprechenden Montageliste zugefügt und aus dem digitalen Modell entfernt. Danach wird wiederum das Verfahren neu begonnen und ein erneutes Einzelbauteil geprüft.

Insbesondere kann somit eine Beschleunigung und Parallelisierung des Verfahrens zur Erzeugung der Montagereihenfolge realisiert werden.

Das Bauteil ist dabei zumindest aus zwei Einzelbauteilen ausgebildet. Mit anderen Worten weist das Bauteil zumindest zwei Einzelbauteile auf, wobei mittels des Verfahrens dann eine Montagereihenfolge der zumindest zwei Einzelbauteile bestimmt werden kann. Mit nochmals anderen Worten bedeutet Vielzahl von Einzelbauteilen mindestens zwei Einzelbauteile.

Gemäß einer vorteilhaften Ausgestaltungsform wird ein jeweiliger Schwerkraftvektor für die drei Raumrichtungen auf das bestimmte Einzelbauteil angewendet. Insbesondere werden dabei sechs Schwerkraftvektoren auf das bestimmte Einzelbauteil angewendet. Somit ist es ermöglicht, dass die unterschiedlichen Schwerkraftvektoren und somit alle Montagerichtungen zuverlässig simuliert werden können, wodurch in vorteilhafterweise die Montagereihenfolge bestimmt werden kann.

Ferner hat es sich als vorteilhaft erwiesen, wenn das digitale Modell als ein rechnergestütztes Konstruktionsmodell bereitgestellt wird. Insbesondere wird das rechnergestützte Konstruktionsmodell in Form eines CAD (Computer Aided Design) bereitgestellt. Insbesondere wird das Modell als dreidimensionales Modell bereitgestellt.

Weiterhin vorteilhaft ist, wenn in Abhängigkeit von einer Höhenlage eines jeweiligen Einzelbauteils als das vorgegebene Kriterium das Einzelbauteil aus der Vielzahl von Einzelbauteilen bestimmt wird. Beispielsweise kann somit aus dem Konstruktionsmodell des Gesamtbauteils das erste Einzelbauteil ermittelt werden, welches "oben liegt", wobei "oben" dadurch gekennzeichnet ist, dass dieses Bauteil zuerst durch einen entsprechenden Kraftstrahl in der x-Achse getroffen wird oder beispielsweise den größten z-Wert aufweist, das größte Teil ist, das kleinste Teil ist oder dergleichen. Die Auswahl einer Vorsortierung kann manuell vorgenommen werden oder anhand bestimmter Heuristen erfolgen, auf die hier nicht eingegangen werden soll. Insbesondere kann somit sehr vorteilhaft das Einzelbauteil bestimmt werden, um das Verfahren entsprechend anwenden zu können.

Es hat sich weiterhin als vorteilhaft erwiesen, wenn bei der simulativen Physik-Maschine eine Reibung zwischen den jeweiligen Einzelbauteilen berücksichtigt wird. Ferner kann beispielsweise auch eine Trägheit der Bauteile, beispielsweise auch unter Berücksichtigung von Materialien, entsprechend berücksichtigt werden. Somit kann zuverlässig die Montagereihenfolge bestimmt werden.

Eine weitere vorteilhafte Ausgestaltungsform sieht vor, dass bei der Bestimmung der Montagereihenfolge simulativ schwebende Einzelbauteile der Vielzahl von Einzelbauteilen verhindert werden. Dies hat insbesondere den Vorteil, dass beispielsweise auch festgestellt werden kann, ob eine montierbare Reihenfolge beschrieben wird. Das heißt, insbesondere dürfen keine schwebenden Teile entstehen, die beispielsweise durch das Herausziehen eines Einzelbauteils aus dem Gesamtmodell entstehen. Dies kann leicht durch beispielsweise eine Kollisionserkennung festgestellt werden, indem untersucht wird, ob die verbleibendenden Einzelbauteile einen geschlossenen Verbund darstellen. Ist dies nicht der Fall, so wird das Verfahren beispielsweise abgebrochen und das nächste Einzelbauteil mit dem ersten Verfahrensschritt untersucht.

Insbesondere kann somit vorgesehen sein, dass bei einer Identifizierung eines simulativ schwebenden Einzelbauteils die Simulation abgebrochen wird und ein weiteres Einzelbauteil bestimmt wird. Es kann dann vorgesehen sein, dass beispielsweise ein Zwischenergebnis der abgebrochenen Simulation zwischengespeichert wird und bei einer nachfolgenden Simulation des weiteren Bauteils genutzt wird. Insbesondere wird somit das Ergebnis eines Einzelbauteils, welches beispielsweise nicht in die Montagereihenfolge aktuell eingesetzt werden kann, zwischengespeichert, damit eine entsprechende Simulation zur Lösung des Bauteils später nicht noch einmal durchgeführt werden muss. Somit kann insbesondere recheneffizient gearbeitet werden.

Ferner hat es sich als vorteilhaft erwiesen, wenn das bestimmte Einzelbauteil nach einer positiven Simulation aus dem digitalen Modell entfernt wird und in eine Liste für die Montagereihenfolge eingetragen wird. Insbesondere erfolgt somit dann wiederum die erneute Simulation des Gesamtbauteils mit dem entfernten Einzelbauteil beziehungsweise mit den entfernten Einzelbauteilen. Somit können weitere Einzelteile entsprechend bestimmt werden, welche dann wiederum nach dem bestimmten Einzelbauteil simuliert werden und die entsprechende Montageliste ergänzen können. Insbesondere erfolgt somit das Simulieren des digitalen Modells nach dem Entfernen des bestimmten Einzelbauteils erneut, insbesondere mit den weiteren Einzelbauteilen. Dies wird solange durchgeführt, bis nur noch ein Einzelbauteil übrig ist und somit das erste Bauteil in der Montagereihenfolge bildet. Insbesondere kann dabei noch untersucht werden, ob beispielsweise das ausgewählte Einzelbauteil ein Teil in einer vorhandenen Montageliste bereits berührt und seinerseits keine Löcher in einer Montageliste entstehen. Wurde, wie bereits gesagt, das bereits geeignete bestimmte Einzelbauteil gefunden, wo wird dieses aus der zu untersuchenden Liste entfernt und in die Montageliste eingetragen. Danach wird erneut in den ersten Schritt übergegangen.

Weiterhin kann vorgesehen sein, dass aneinander fixierte Einzelbauteile bei der Bestimmung der Montagereihenfolge berücksichtigt werden. Beispielsweise können die aneinander fixierten Einzelbauteile als Einzelbauteil betrachtet werden. Eine solche Fixierung kann beispielsweise über Klippverbindungen entsprechend berücksichtigt werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen. Das Computerprogrammprodukt kann auch als Computerprogramm bezeichnet werden.

Weiterhin betrifft die Erfindung auch ein computerlesbares Speichermedium mit einem Computerprogrammprodukt.

Ein weiterer Aspekt der Erfindung betrifft eine elektronische Recheneinrichtung zum Bestimmen einer Montagereihenfolge eines Bauteils, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Die elektronische Recheneinrichtung weist beispielsweise Prozessoren, Schaltkreise, insbesondere integrierte Schaltkreise, sowie weitere elektronische Bauteile auf, um die entsprechenden Verfahrensschritte durchführen zu können.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe eine Nutzerrückmeldung ausgegeben und/oder eine Standardeinstellung und/oder ein vorbestimmter Initialzustand eingestellt wird.

Die Erfindung wird nun anhand von Ausführungsbeispielen gemäß der Zeichnungen näher erläutert. Dabei zeigen:
- FIG 1: ein schematisches Ablaufdiagramm gemäß einer Ausführungsform des Verfahrens;
- FIG 2: eine schematische Perspektivansicht gemäß einer Ausführungsform eines Bauteils; und
- FIG 3: ein weiteres schematisches Ablaufdiagramm gemäß einer Ausführungsform des Verfahrens.

In den Figuren sind gleiche oder funktionsgleiche Elemente mit gleichen Bezugszeichen versehen.

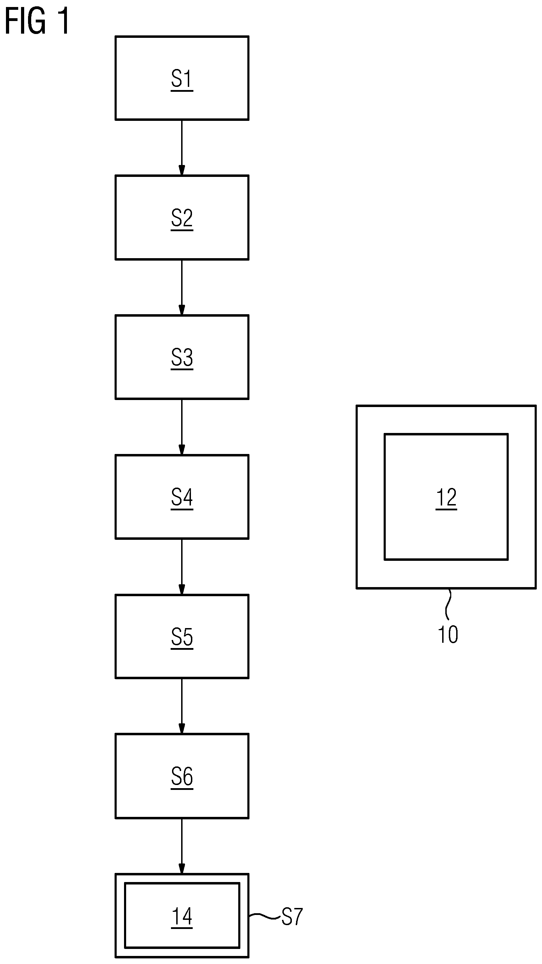

FIG 1 zeigt ein schematisches Ablaufdiagramm gemäß einer Ausführungsform des Verfahrens. Insbesondere ist eine elektronische Recheneinrichtung 10 gezeigt, wobei die elektronische Recheneinrichtung 10 zumindest eine Physik-Maschine 12 aufweist.

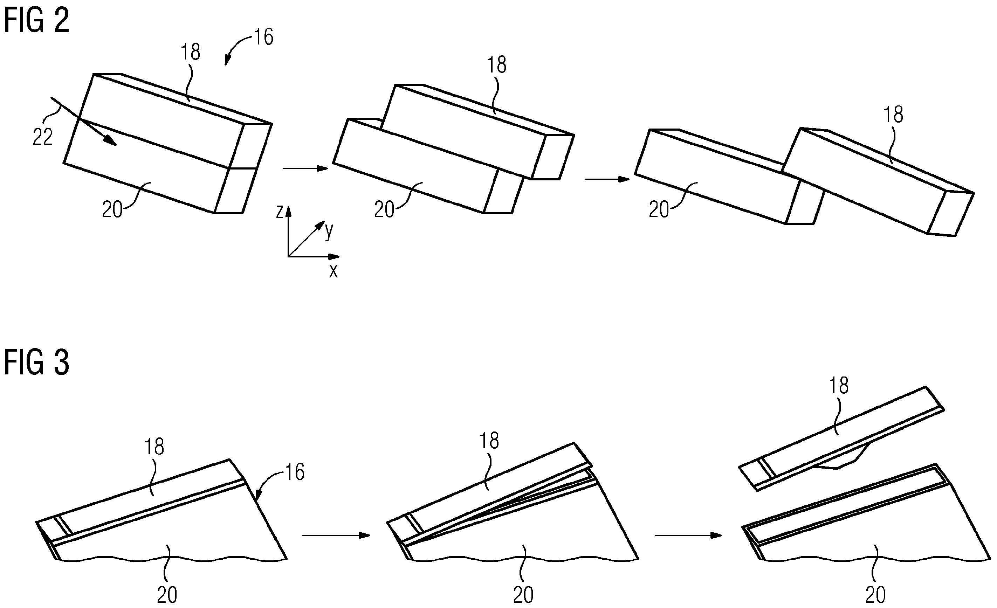

Die FIG 1 zeigt insbesondere ein Bestimmen einer Montagereihenfolge 14 eines Bauteils 16 (FIG 3), wobei das Bauteil 16 aus einer Vielzahl von Einzelbauteilen 18, 20 (FIG 3) ausgebildet ist. Das Bauteil 16 ist aus zumindest zwei Einzelbauteilen 16, 18 ausgebildet.

In einem ersten Schritt S1 erfolgt dabei insbesondere, dass die zur Verfügung stehenden Einzelbauteile 18, 20 im Raum fixiert werden. Es wird in einem zweiten Schritt S2 zufällig eines der Einzelbauteile 18, 20 ausgewählt, dessen Fixierung aufgehoben wird. Die zufällige Reihenfolge kann dabei unter Umständen optimiert werden, indem beispielsweise zuerst das Einzelbauteil 18, 20 ausgewählt wird, das beispielsweise "oben" liegt, wobei "oben" dadurch gekennzeichnet ist, dass dieses Teil zuerst durch einen Strahl in x-Achse getroffen wird oder den größten z-Wert aufweist, das größte Teil, das kleinste Teil etc. Die Auswahl der Vorsortierung kann manuell vorgenommen werden oder anhand bestimmter Heuristiken erfolgen, auf die hier nicht näher eingegangen wird.

Im dritten Schritt S3 wird nun ein Schwerkraftvektor 22 (FIG 2) an das ausgewählte Bauteil 18, 20 angelegt. Da insbesondere ein CAD-Modell vorliegt und beliebig gedreht werden kann, werden insbesondere alle drei Raumrichtungen x, y, z mit beiden Vorzeichen, also insgesamt sechs Vektoren entsprechend durchprobiert.

Im vierten Schritt S4 wird die Auswirkung des Schwerkraftvektors 22 mit einer Physik-Simulation, also insbesondere mittels der Physik-Maschine 12, insbesondere in Form einer Physics-Engine, simuliert. Der Vorteil liegt darin, dass der gesuchte Lösungsvektor, insbesondere die Montagerichtung, nicht identisch mit dem angelegten Kraftvektor sein muss, sondern sich nur im richtigen Halbraum, insbesondere die richtige Seite der Ebene senkrecht zum Kraftvektor, befinden muss. Dadurch können durch einen Simulationsdurchlauf quasi unendlich viele mögliche Montagerichtungen durchprobiert werden, insbesondere können alle Vektoren im aktuell getesteten Halbraum, insbesondere mit einem Winkel von < 90° zum Kraftvektor, entsprechend durchprobiert werden.

Im fünften Schritt S5 wird das Einzelbauteil 18, 20 entsprechend gelöst, wobei hier zunächst festgestellt wird, ob eine montierbare Reihenfolge beschrieben wird. Das heißt, insbesondere dürfen keine schwebenden Einzelbauteile 18, 20 entstehen, die durch das Herausziehen eines Bauteils 18, 20 außerhalb der Reihenfolge entstehen. Dies kann beispielsweise durch eine Kollisionserkennung festgestellt werden, indem untersucht wird, ob die verbleibendenden Einzelbauteile 18, 20 einen geschlossenen Verbund darstellen. Ist dies nicht der Fall, so wird das Verfahren abgebrochen und ein weiteres Einzelbauteil 18, 20 mit dem ersten Schritt S1 untersucht. Das Ergebnis kann jedoch zwischengespeichert werden, damit die entsprechende Simulation zur Lösung des Einzelbauteils 18, 20 später nicht noch einmal durchgeführt werden muss.

Im sechsten Schritt S6 wird nun untersucht, ob das ausgewählte Einzelbauteil 18, 20 einen Teil in der vorhanden ersten Montageliste berührt und seinerseits beispielsweise keine Löcher in der Montageliste entstehen.

Im siebten Schritt S7 wird dann ein geeignetes Bauteil gefunden, wobei dies dann aus der zu untersuchenden Liste entfernt und in die Montageliste beziehungsweise die Montagereihenfolge 14 eingetragen. Danach wird das nächste Einzelbauteil 18, 20 untersucht.

FIG 2 zeigt ein weiteres schematisches Ablaufdiagramm gemäß einer Ausführungsform des Verfahrens. Insbesondere sind zwei quaderförmige Einzelbauteile 18, 20 gezeigt, welche fixiert aufeinander liegen in einer ersten Situation, welche links dargestellt ist. Es wird nun der Schwerkraftvektor 22 angelegt. Simulativ erfolgt nun das Verschieben des oberen Bauteils, im folgenden Ausführungsbeispiel des ersten Einzelbauteils 18 von dem zweiten Einzelbauteil 20. Dies ist insbesondere im mittleren Teil der FIG 2 dargestellt. Im rechten Teil der FIG 2 ist insbesondere dargestellt, dass beispielsweise aufgrund der Schwerkraft nun das erste Einzelbauteil 18 vom zweiten Einzelbauteil 20 "herunterfällt". Insbesondere ist somit gezeigt, dass beispielsweise das Anlegen des Schwerkraftvektors 22 schräg zur Montagerichtung durchgeführt werden kann und trotzdem ein entsprechender Montagevektor gefunden wird. Beispielsweise in diesem Fall ein seitliches Wegziehen des ersten Einzelbauteils 18. Je nach Stärke von Schwerkraft und Reibung kippt der Block dann am Rand nach unten, insbesondere in Richtung Schwerkraft, was insbesondere auf der rechten Seite in FIG 2 dargestellt ist. Würde man bei einem einfachen Verfahren den Schwerkraftvektor 22 testen, so würde es beispielsweise zu einer Kollision kommen, da diese Montagerichtung nicht funktioniert. Das Bauteil lässt sich in diese Richtung nicht lösen. Je nach Qualität der Simulation kann somit auch eine nicht lineare Fügerichtung behandelt werden bis hin zum Lösen von Schraubverbindungen, das heißt, dabei wird die Schraube durch ein entsprechendes Anlegen der Auszugskraft in Bewegung gesetzt, wobei in diesem Fall ein Anteil des Kraftvektors parallel zur Schraubenachse angelegt werden müsste. Wichtig ist dabei auch, dass die Auflösung, insbesondere die sogenannte Tessellation, hoch genug eingestellt wird, da sonst die Kollisionserkennung der Physik-Maschine 12 nicht korrekt funktioniert. Dies spielt insbesondere dann eine Rolle, wenn das Einzelbauteil 18, 20 entlang des anderen Vektors gelöst wird als dem eigentlich Schwerkraftvektor 22.

FIG 3 zeigt eine weitere schematische Ausführungsform des Verfahrens. Insbesondere ist das Bauteil 16 bestehend aus beispielsweise dem ersten Einzelbauteil 18 sowie dem zweiten Einzelbauteil 20 gezeigt. Insbesondere ist beispielsweise das Gehäuse einer elektronischen Recheneinrichtung gezeigt, wobei das erste Einzelbauteil 18 einen Gehäusedeckel simuliert und das zweite Bauteil 20 ein reines Gehäuseteil. Es wird nun in den entsprechend Schritten das Entfernen des Gehäusedeckels, insbesondere also vorliegend des ersten Einzelbauteils 18, gezeigt. Insbesondere kann somit das erfindungsgemäße Verfahren auch auf komplexe Bauteile 16 angewendet werden. Die Qualität der Berechnung hängt dabei im Wesentlichen davon ab, wie gut die Physik-Maschine 12 Kollisionen darstellen kann, da das zu lösende Bauteil 16 zunächst in eine andere Richtung als die Kraftrichtung abgelenkt werden muss.

Gemäß der durch die oben beschriebenen Verfahren ermittelten Montagereihenfolge des zusammenzufügenden Bauteils 16 kann dieses, insbesondere durch eine Produktionsanlage und/oder durch einen Roboter als reales Bauteil aus seinen Einzelbauteilen physisch zusammengefügt oder montiert werden. Das so montierte physische Bauteil kann hierbei insbesondere ein Bauteil einer Maschine sein.

## Patentansprüche

1. Verfahren zum Bestimmen einer Montagereihenfolge (14) eines Bauteils (16) mittels einer elektronischen Recheneinrichtung (10), wobei das Bauteil (16) aus einer Vielzahl von Einzelbauteilen (18, 20) zusammengesetzt wird, mit den Schritten:
- Bereitstellen eines digitalen Modells des zusammengesetzten Bauteils (16);
- Bestimmen eines Einzelbauteils (16, 18) der Vielzahl von Einzelbauteilen (16, 18) in Abhängigkeit von einem vorgegebenen Kriterium;
- Anwenden von zumindest einem Schwerkraftvektor (22) auf das bestimmte Einzelbauteil (16, 18);
- Bestimmen einer Auswirkung einer mittels des Schwerkraftvektors (22) erzeugten Kraft auf das bestimmte Einzelbauteil (16, 18) mittels einer simulativen Physik-Maschine (12), wobei eine Montagerichtung sich auf einer bestimmten Seite einer Ebene senkrecht zum Schwerkraftvektor befinden muss, wobei durch einen Simulationsdurchlauf eine Reihe möglicher Montagerichtungen getestet wird, wobei sich alle Vektoren der Montagerichtungen in dem aktuell getesteten Halbraum mit einem Winkel von < 90° zum Schwerkraftvektor befinden;
- Bestimmen der Montagereihenfolge (14) in Abhängigkeit von der bestimmten Auswirkung unter Berücksichtigung einer Kollisionserkennung des bestimmten Einzelbauteils (16, 18) mit einem weiteren Einzelbauteil (16, 18), wobei bei der Bestimmung der Montagereihenfolge (14) simulativ schwebende Einzelbauteile (16, 18) der Vielzahl von Einzelbauteilen (16, 18) verhindert werden, wobei schwebende Einzelbauteile (18, 20) durch Herausziehen eines Bauteils (18, 20) aus der Reihenfolge entstehen,
wobei bei einer Identifizierung eines simulativ schwebenden Einzelbauteils (16, 18) die Simulation abgebrochen wird und ein weiteres Einzelbauteil (16, 18) bestimmt wird, und wobei das bestimmte Einzelbauteil (16, 18) nach einer positiven Simulation aus dem digitalen Modell entfernt wird und in eine Liste für die Montagereihenfolge (14) eingetragen wird;
- nach einer positiven Simulation Neu-Simulieren des digitalen Modells nach dem Entfernen des bestimmten Einzelbauteils mit den weiteren Einzelbauteilen bis nur noch ein Einzelbauteil übrig ist und somit das erste Bauteil in der Montagereihenfolge bildet; und
- Zusammensetzen der Einzelbauteile (18, 20) gemäß der bestimmten Montagereihenfolge (14) des Bauteils (16).

2. Verfahren nach Anspruch 1,
**dadurch gekennzeichnet, dass**
ein jeweiliger Schwerkraftvektor (229 für die drei Raumrichtungen (y, y, z) auf das bestimmte Einzelbauteil (16, 18) angewendet wird.

3. Verfahren nach Anspruch 2,
**dadurch gekennzeichnet, dass**
sechs Schwerkraftvektoren (22) auf das bestimmte Einzelbauteil (16, 18) angewendet werden.

4. Verfahren nach einem der vorhergehenden Ansprüche,
**dadurch gekennzeichnet, dass**
das digitale Modell als ein rechnergestütztes Kontruktionsmodell bereitgestellt wird.

5. Verfahren nach einem der vorhergehenden Ansprüche,
**dadurch gekennzeichnet, dass**
in Abhängigkeit von einer Höhenlage eines jeweiligen Einzelbauteils (16, 18) als das vorgegebene Kriterium das Einzelbauteil (16, 18) aus der Vielzahl von Einzelbauteilen (16, 18) bestimmt wird.

6. Verfahren nach einem der vorhergehenden Ansprüche,
**dadurch gekennzeichnet, dass**
bei der simulativen Physik-Maschine (12) eine Reibung zwischen den jeweiligen Einzelbauteilen (16, 18) berücksichtigt wird.

7. Verfahren nach einem der vorhergehenden Ansprüche,
**dadurch gekennzeichnet, dass**
ein Zwischenergebnis der abgebrochenen Simulation zwischengespeichert wird und bei einer nachfolgenden Simulation des weiteren Einzelbauteils (16, 18) genutzt wird.

8. Verfahren nach einem der vorhergehenden Ansprüche, **dadurch gekennzeichnet, dass**
das digitale Modell nach dem Entfernen des bestimmten Einzelbauteils (16, 18) erneut simuliert wird.

9. Verfahren nach einem der vorhergehenden Ansprüche, **dadurch gekennzeichnet, dass**
aneinander fixierte Einzelbauteile (16, 18) bei der Bestimmung der Montagereihenfolge (14) berücksichtigt werden.

10. Computerprogrammprodukt mit Programmcodemitteln, welche eine elektronische Recheneinrichtung (10) dazu veranlassen, wenn die Programmcodemittel von der elektronischen Recheneinrichtung (10) abgearbeitet werden, ein Verfahren nach einem der Ansprüche 1 bis 9 durchzuführen.

11. Computerlesbares Speichermedium mit einem Computerprogrammprodukt nach Anspruch 10.

12. Elektronische Recheneinrichtung (10) zum Bestimmen einer Montagereihenfolge (14) eines Bauteils (16), wobei die elektronische Recheneinrichtung (10) zum Durchführen eines Verfahrens nach einem der Ansprüche 1 bis 9 ausgebildet ist.

## Claims

1. Method for determining an assembly sequence (14) of a component (16) by means of an electronic computing device (10), wherein the component (16) is assembled from a multiplicity of individual components (18, 20), comprising the steps of:
- providing a digital model of the assembled component (16);
- determining an individual component (16, 18) of the multiplicity of individual components (16, 18) in dependence on a prescribed criterion;
- applying at least one gravitational force vector (22) to the determined individual component (16, 18);
- determining an effect of a force generated by means of the gravitational force vector (22) on the determined individual component (16, 18) by means of a simulative physics machine (12), wherein an assembly direction must be on a specific side of a plane perpendicular to the gravitational force vector, wherein a series of possible assembly directions are tested by a simulation run, wherein all of the vectors of the assembly directions in the currently tested half-space are at an angle of < 90° to the gravitational force vector;
- determining the assembly sequence (14) in dependence on the determined effect while taking into account collision detection of the determined individual component (16, 18) with a further individual component (16, 18), wherein, when determining the assembly sequence (14), simulatively floating individual components (16, 18) of the multiplicity of individual components (16, 18) are prevented, wherein floating individual components (18, 20) are caused by withdrawing a component (18, 20) from the sequence,
wherein, in the event of identification of a simulatively floating individual component (16, 18), the simulation is aborted and a further individual component (16, 18) is determined, and wherein, after a positive simulation, the determined individual component (16, 18) is removed from the digital model and entered into a list for the assembly sequence (14);
- after a positive simulation, once the determined individual component has been removed, re-simulating the digital model with the further individual components until only one individual component is left, and thus forms the first component in the assembly sequence; and
- assembling the individual components (18, 20) according to the determined assembly sequence (14) of the component (16).

2. Method according to Claim 1,
**characterized in that**
a respective gravitational force vector (22) for the three spatial directions (y, y, z) is applied to the determined individual component (16, 18).

3. Method according to Claim 2,
**characterized in that**
six gravitational force vectors (22) are applied to the determined individual component (16, 18).

4. Method according to one of the preceding claims, **characterized in that**
the digital model is provided as a computer-aided design model.

5. Method according to one of the preceding claims,
**characterized in that**
the individual component (16, 18) is determined from the multiplicity of individual components (16, 18) in dependence on a vertical position of a respective individual component (16, 18) as the prescribed criterion.

6. Method according to one of the preceding claims,
**characterized in that**
friction between the respective individual components (16, 18) is taken into account in the simulative physics machine (12).

7. Method according to one of the preceding claims,
**characterized in that**
an intermediate result of the aborted simulation is buffer-stored and used in a subsequent simulation of the further individual component (16, 18).

8. Method according to one of the preceding claims,
**characterized in that**
the digital model is re-simulated once the determined individual component (16, 18) has been removed.

9. Method according to one of the preceding claims,
**characterized in that**
individual components (16, 18) fixed to one another are taken into account when determining the assembly sequence (14).

10. Computer program product comprising program code means that cause an electronic computing device (10) to carry out a method according to one of Claims 1 to 9 when the program code means are executed by the electronic computing device (10).

11. Computer-readable storage medium comprising a computer program product according to Claim 10.

12. Electronic computing device (10) for determining an assembly sequence (14) of a component (16), wherein the electronic computing device (10) is designed for carrying out a method according to one of Claims 1 to 9.

## Revendications

1. Procédé de détermination d'un ordre (14) de montage d'un composant (16) au moyen d'un dispositif (10) informatique électronique, dans lequel le composant (16) est composé d'une pluralité de composants (18, 20) individuels, comprenant les stades :
- se procurer un modèle numérique du composant (16) composé ;
- déterminer un composant (16, 18) individuel parmi la pluralité de composants (16, 18) individuels en fonction d'un critère donné à l'avance ;
- appliquer au moins un vecteur (22) de la force de gravité au composant (16, 18) individuel déterminé ;
- déterminer un effet d'une force produite au moyen du vecteur (22) de la force de gravité sur le composant (16, 18) individuel déterminé au moyen d'une machine (12) physique de simulation, dans lequel une direction de montage doit se trouver d'un côté déterminé d'un plan perpendiculaire au vecteur de la force de gravité, dans lequel, par une exécution de simulation, on teste une série de directions de montage possibles, dans lequel tous les vecteurs des directions de montage se trouvent dans le demi-espace testé en cours, faisant un angle < à 90° avec le vecteur de la force de gravité ;
- détermination de l'ordre (14) de montage en fonction de l'effet déterminé, en tenant compte d'une identification de collision du composant (16, 18) individuel déterminé avec un autre composant (16, 18) individuel, dans lequel, lors de la détermination de l'ordre (14) de montage, on fait obstacle à des composants (16, 18) individuels flottants simulativement de la pluralité de composants (16, 18) individuels, dans lequel des .
composants (18, 20) flottants se créent en retirant un composant (18, 20) de l'ordre,
dans lequel, lors d'une identification d'un composant (16, 18) individuel flottant simulativement, on interrompt la simulation et on détermine un autre composant (16, 18) individuel, et dans lequel on retire du modèle numérique le composant (16, 18) individuel déterminé après une simulation positive et on l'introduit dans une liste pour l'ordre (14) de montage ;
- après une simulation positive, resimuler le modèle numérique, après le retrait du composant individuel déterminé, avec les autres composants individuels, jusqu'à ce qu'il ne reste plus qu'un composant individuel, qui forme ainsi le premier composant de l'ordre de montage ; et
- composer les composants (18, 20) individuels suivant l'ordre (14) de montage déterminé du composant (16).

2. Procédé suivant la revendication 1,
**caractérisé en ce que**
l'on applique un vecteur (22) de la force de gravité respective pour les trois directions (y, y, z) de l'espace au composant (16, 18) individuel déterminé.

3. Procédé suivant la revendication 2,
**caractérisé en ce que**
l'on applique six vecteurs (22) de la force de gravité au composant (16, 18) individuel déterminé.

4. Procédé suivant l'une des revendications précédentes, **caractérisé en ce que**
l'on dispose du modèle numérique sous la forme d'un modèle de construction assisté par ordinateur.

5. Procédé suivant l'une des revendications précédentes, **caractérisé en ce que**, .
en fonction d'une position en hauteur d'un composant (16, 18) individuel respectif comme le critère donné à l'avance, on détermine le composant (16, 18) individuel parmi la pluralité des composants (16, 18) individuels.

6. Procédé suivant l'une des revendications précédentes, **caractérisé en ce que**,
dans la machine (12) physique de simulation, on prend en compte un frottement entre les composants (16, 18) individuels respectifs.

7. Procédé suivant l'une des revendications précédentes, **caractérisé en ce que**
l'on met en mémoire intermédiaire un résultat intermédiaire de la simulation interrompue et on l'utilise lors d'une simulation à venir de l'autre composant (16, 18) individuel.

8. Procédé suivant l'une des revendications précédentes, **caractérisé en ce que**
l'on simule à nouveau le modèle numérique après le retrait du composant (16, 18) individuel déterminé.

9. Procédé suivant l'une des revendications précédentes, **caractérisé en ce que**
l'on prend en compte les composants (16, 18) individuels fixés l'un à l'autre lors de la détermination de l'ordre (14) de montage.

10. Produit de programme d'ordinateur ayant des moyens de code de programme, qui font qu'un dispositif (10) informatique électronique, lorsque les moyens de code de programme sont élaborés par le dispositif (10) informatique électronique, effectuent un procédé suivant l'une des revendications 1 à 9. .

11. Support de mémoire déchiffrable par ordinateur comprenant un produit de programme d'ordinateur suivant la revendication 10.

12. Dispositif (10) informatique électronique pour la détermination d'un ordre (14) de montage d'un composant (16), dans lequel le dispositif (10) informatique électronique est constitué pour effectuer un procédé suivant l'une des revendications 1 à 9. .
